# EUROPEAN PATENT APPLICATION

(11) **EP 1 479 576 A2**
(43) Date of publication of application: **24.11.2004**
(21) Application number: 04253043.6
(22) Date of filing: 24.05.2004
(51) Int. Cl.: B60S 1/40

(54) **Wiper arm connecting clip**

(30) Priority: 23.05.2003 GB 0311960
(71) Applicant: TRICO LIMITED, Gwent NP4 0XZ, Wales (GB)
(72) Inventor: Robertson, Alistair, Pontnewynydd Pontypool NP4 6PF (GB); Jones, Christopher, Aberdare Mid Glamorgan CF44 8PY (GB); Evans, Philip, Malpas Newport NP20 6JL (GB); Mallett, Robert, Rhymney Tredegar NP22 5NG (GB); Daniels, Roger, Cwmbran Torfaen NP44 1DB (GB)
(74) Representative: Britter, Keith Palmer

(57) **Abstract**

A clip (1) for connecting an end of a wiper arm to a wiper blade assembly, the clip (1) comprising a body (2) defining two or more recesses (5, 6) arranged to receive therein different ends of wiper arms, preferably in close tolerance or friction fit therewith.

## Description

The present invention generally relates to a clip for separately connecting a wide range of wiper arms of different connecting end configurations of different sizes to a wiper blade assembly. The invention is especially, but not exclusively, related to such a clip having at least one surface, such as that provided by a locating recess or passage, for receiving therein the end of the wiper arm in a close tolerance or friction fit therewith and, more particularly, but not exclusively, to such a clip for connecting a wiper arm having a hooked end connection configuration to a wiper blade assembly.

A wiper arm connection clip connects an end of a wiper arm to a wiper blade assembly whereby, in use, the wiper arm is driven in a reciprocating fashion through an arc to cause the wiper blade to sweep over a vehicle windscreen, for example. Consequently, in addition to affording a degree of pivotal movement of the wiper blade assembly relative to the connecting end of the wiper arm, the clip must also be sufficiently strong to withstand the stresses induced therein by the repeated sweeping movement of the wiper blade assembly during the lifetime of the blade assembly. Known wiper arm connecting clips are therefore normally provided to be used with a wiper arm having a specific connecting end configuration of a specific size, because of the precise nature of the connection that is required between the wiper arm and the wiper blade assembly and the need for the clip to be durable. Thus, a vast range of different connecting clips of different sizes and configurations have to be provided for use with the various combinations of different end connecting configurations and different sizes found in currently available wiper arms.

Known connecting end configurations for currently available wiper arms include a bayonet configuration, a hooked end configuration and a side locking pin configuration. In the case of wiper arms having a hooked connecting end configuration, another disadvantage associated with conventional wiper arm connecting clips is that a comparatively large aperture has to be provided in the clip to accommodate the hooked end of the wiper arm whilst that end is being fitted to the clip.

Once the hooked end of the wiper arm has been received by the close tolerance or friction fit surface of, say, a locating recess in the clip, that aperture is left exposed to the elements during use. This is aerodynamically inefficient, as well as acting as a trap for moisture and dirt which can build-up in the aperture and other parts of the clip, thereby tending to have an undesirable effect upon the function of the clip and associated wiper arm and wiper blade assembly.

Further, many conventional types of wiper arm connecting clip are assembled from a plurality of preformed components, thereby increasing their complexity and cost of manufacture, as well as reducing their reliability, durability and, hence, their working lives.

It is an object of the present invention, therefore, to provide a wiper arm connecting clip which can be used with a plurality of wiper arms of different connecting end configurations and sizes.

It is another object of the invention to provide a wiper arm connecting clip with enhanced aerodynamic efficiency and resistance to the elements, as well as being aesthetically pleasing to the eye.

A further object of the invention is to provide a wiper arm connecting clip of unitary structure and simplified construction.

Accordingly, a first aspect of the invention provides a clip for connecting an end of a wiper arm to a wiper blade assembly, the clip comprising a body defining two or more recesses arranged to receive therein, preferably in close tolerance or friction fit therewith, respective, different ends of wiper arms.

The recesses may be arranged to receive ends of wiper arms of different connection configurations and/or different sizes.

At least one of the recesses may be provided with a resiliently deformable tongue member to assist reception of an end of a wiper arm having a bayonet type connecting end in said recess.

The recess for receiving a wiper arm having a bayonet type connecting end may have an aperture associated therewith for engaging a complementary retaining prong of the wiper arm on reception of the wiper arm connecting end in the recess.

Preferably, the two or more recesses comprise two or more spaced surfaces which are arranged to receive thereon respective different sizes of hooked ends of wiper arms

Preferably, the body of the clip includes a pair of spaced surfaces defined by respective locating recesses which may be provided on opposed sides of a wall of the clip body.

At least one of the receiving surfaces may be provided with a resilient retaining prong which can be engaged within a complementary aperture in, say, the return portion of the hooked end of a wiper arm fitted to the clip.

The retaining prong is preferably resilient, so that it can be disengaged from the complementary aperture, to permit the hooked end of the wiper arm to be detached from the clip, for maintenance purposes or when changing the arm or associated wiper blade assembly.

Preferably, the clip body has a channel for accommodating a main portion of a hooked end of a wiper arm, said channel comprising an upper surface of a wall and side walls of the clip body, at least one of said side walls having a resiliently deformable wall portion which extends into the channel to engage a main portion of a hooked end of a wiper arm. The at least one resiliently deformable wall portion enables the clip to accommodate wiper arms having hooked ends of different widths can provide, at least partially, a necked portion adjacent the outer end of the channel.

In a preferred embodiment of clip to be described hereinbelow, a plug is provided for effectively closing an otherwise exposed aperture in the clip body after the hooked end of a wiper arm has been fitted thereto.

Any such plug may be movable between respective open and closed positions with respect to the aperture by means of, say, a hinge which can be formed integrally with the clip body and plug.

The outer surface of the plug, when in its closed position with respect to the aperture, may be shaped so as to provide a generally smooth continuous surface with the outer surface of the adjacent end of the wiper arm, thereby rendering such a combination aerodynamically efficient, as well as being aesthetically pleasing to the eye. Also, the plug, in its closed position, prevents, or at least substantially reduces, the ingress of water and/or dirt particles into the clip body through the otherwise open wiper arm access aperture.

Any such plug may be provided with a lug which, with the plug in its closed position with respect to the aperture in the clip body, engages the arcuate surface of the hooked end of a wiper arm fitted to the clip.

In one embodiment of wiper arm connecting clip to be described hereinbelow, the lug of the plug can act as a back-up, should the other means for retaining the hooked end of the wiper arm in the clip fail for whatever reason.

Alternatively, that lug may be used to retain in position the hooked end of a wiper arm fitted to the clip.

Thus, in one configuration, for one size of hooked end of wiper arm, the lug of the plug acts effectively as a back-up, whereas in another configuration with a different size of hooked end of wiper arm, the lug is used as a retention means for the hooked end of the wiper arm within the clip.

The lug may have a snap-fit aperture formed integrally therewith and arranged such that, when said plug is moved to its closed position, the snap-fit aperture is co-incident with, say, a larger aperture formed in the clip body and can be engaged with a pin of a wiper arm side connection means located through the larger or other aperture.

As indicated above, at least one of the surfaces may be provided with a resilient retaining prong engageable within a complementary aperture within the return portion of the hooked end of a wiper arm.

A second aspect of the invention resides in a clip for connecting a wiper arm to a wiper blade assembly, the clip comprising a body having an aperture therein for permitting access of the hooked end of a wiper arm to a close tolerance or friction fit surface, wherein the clip also comprises a plug for closing the access aperture, which plug, in its closed position with respect to the aperture, provides an exterior surface which has enhanced aerodynamically efficiently and is aesthetically pleasing to the eye.

The plug may be provided with a lug which, when the plug is in its closed position with respect to the otherwise open aperture, engages the arcuate or other surface of the hooked end of a wiper arm fitted to the clip.

Any such plug may be hinged to the body of the clip, preferably integrally therewith, in which case, the clip may be formed from a single plastics moulding, in which case, the hinge may be provided as a weakened portion thereof.

A third aspect of the invention resides in a clip for connecting a wiper arm to a wiper blade assembly, the clip comprising a body having an aperture therein for permitting access of the hooked end of a wiper arm to a close tolerance or friction fit surface, wherein the clip includes a channel for accommodating a main portion of a hooked end of a wiper arm, said channel comprising an upper surface of a wall and side walls of the clip body, at least one of said side walls having a resiliently deformable wall portion that extends into the channel to engage a main portion of a hooked end of a wiper arm.

The resiliently deformable wall portion at least partially defines a necked portion of the channel adjacent an end thereof.

In order that the various aspects of the invention may be more fully understood, a preferred form of clip for connecting a wiper arm to a wiper blade assembly, will now be described by way of example and with reference to the accompanying drawings in which:
Figure 1 is a top plan view of a wiper arm connecting clip in accordance with a first embodiment of the invention;
Figure 2 is a side elevational view of the clip shown in Figure 1;
Figure 3 is a bottom plan view of the clip shown in Figures 1 and 2;
Figure 4 is a sectional view of the side elevation of the clip shown in Figure 2;
Figure 5 is an isometric view of the clip shown in Figures 1 to 4;
Figure 6 is a side elevational view, in partial section, of the clip of Figures 1 to 5 connecting one size of hooked end wiper arm to a wiper blade assembly;
Figure 7 is a side elevational view, in partial section, of the clip shown in Figures 1 to 5 connecting another size of hooked end wiper arm to a wiper blade assembly;
Figure 8 is a top plan view of a wiper arm connecting clip in accordance with a second embodiment of the invention;
Figure 9 is a side elevational view of the clip shown in Figure 8;
Figure 10 is a bottom plan view of the clip shown in Figures 8 and 9;
Figure 11 is a sectional view of the side elevation of the clip shown in Figure 9;
Figure 12 is an end view from the left side of the clip shown in Figure 9;
Figure 13 is an isometric view of the clip shown in Figures 8 to 12;
Figure 14 is a side elevational view, in partial section, of the clip of Figures 8 to 13 connecting a bayonet type wiper arm to a wiper blade assembly;
Figure 15 is a plan view, in partial section, of the clip shown in Figures 8 to 13 connecting a side locking pin wiper arm to a wiper blade assembly; and
Figure 16 is a side elevational view of the clip shown in Figure 8 with a plug thereof shown in its closed position.

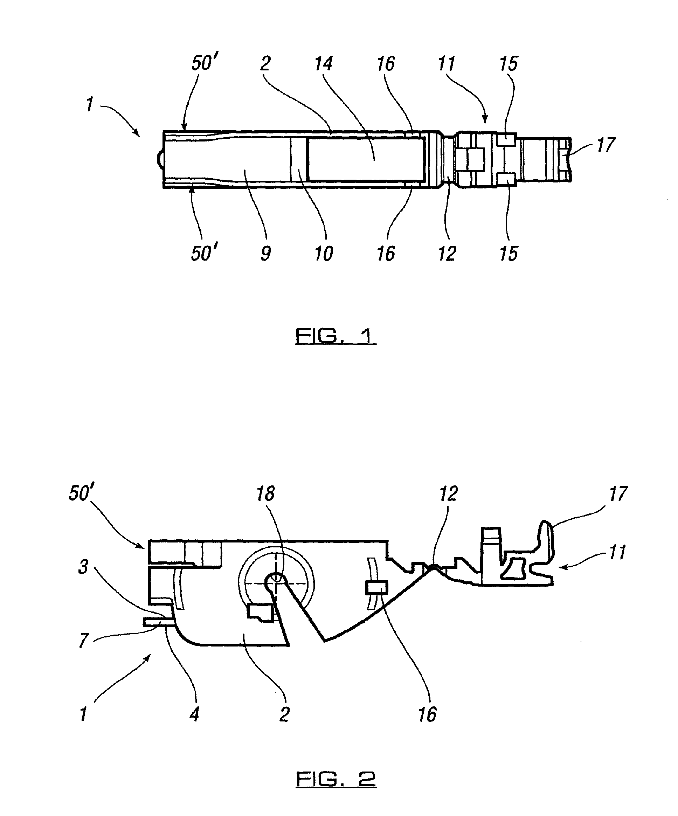

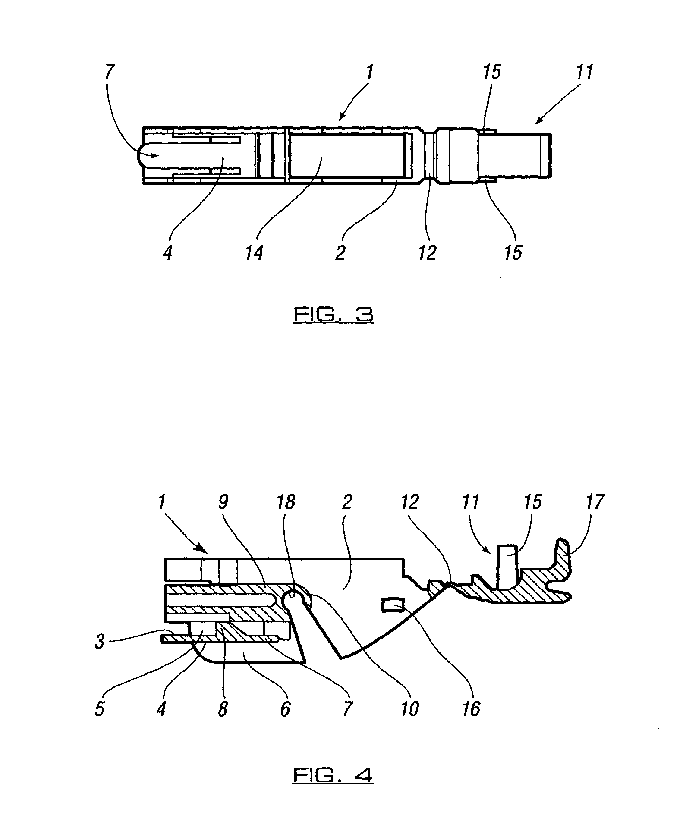

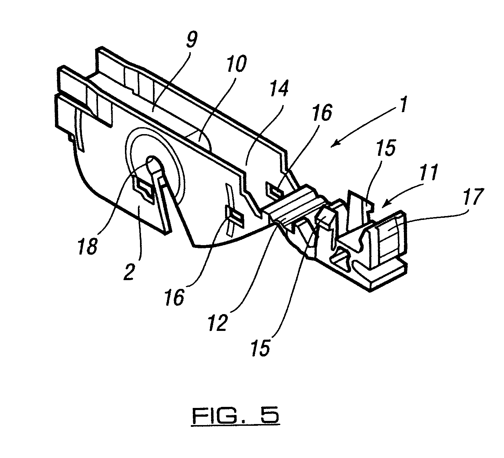

A first preferred embodiment of the present invention will be described with reference to Figures 1 to 7 of the accompanying drawings. Referring firstly to Figures 1 to 5, a unitary, moulded plastics clip, indicated generally at 1, for connecting different sizes of hooked ends of a wiper arm (not shown) to a wiper blade assembly (not shown) comprises a body 2 defining a pair of spaced upper and lower surfaces 3, 4, as shown in Figures 2 to 4, arranged to receive thereon respective different sizes of hooked ends of wiper arm, in close tolerance therewith.

The pair of spaced, hooked end-receiving surfaces 3, 4 are at least partially defined by respective locating recesses 5, 6 on opposed upper and lower sides of a wall 7 of the clip body 2.

The wall 7 is resilient and is provided on its upper, hooked end-receiving surface 3 with a retaining prong 8 which is engageable within a complementary aperture in the return portion of the hooked end of a wiper arm fitted against the upper surface 3.

In use of the clip 1, a smaller hooked end of a wiper arm is located with its return portion located within the recess 5 and engaging the upper surface 3 of the wall 7 in close tolerance therewith. Also, the retaining prong 8 is engaged within a complementary aperture in the return portion of the hooked end of the wiper arm, as will be illustrated hereinbelow.

Alternatively, a larger hooked end of another wiper arm can be located within the other recess 6, with its return portion engaging the lower surface 4 of the wall 7.

In either case, the main portion of the hooked end of the corresponding wiper arm lies in general engagement with an upper surface 9 of the body 2, as shown in Figures 1, 4 and 5. The curved portion of the hooked end of a corresponding wiper arm engages around a correspondingly-shaped arcuate surface 10 of the body 2, as shown in Figures 1, 4 and 5.

A plug, indicated generally at 11, is connected to the body 2 of the clip 1 by means of a weakened portion 12 of the material from which the clip 1 is moulded, to provide a hinge between the body 2 and plug 11.

In Figures 1 to 5, the plug 11 is shown in its open position with respect to an aperture 14 extending through the body 2.

With the hooked end of a wiper arm connected to the clip 1, the plug 3 can be pivoted about the hinge 12 into its closed position with respect to the aperture 14.

In that closed position of the plug 11, the outer surface thereof is shaped to provide a generally smooth, continuous surface with the outer surface of the adjacent end of the wiper arm, thereby rendering such a combination comparatively aerodynamically efficient, as well as aesthetically pleasing to the eye. Also, the plug, in its closed position, prevents, or at least substantially reduces, the ingress of water and/or dirt particles into the clip body 2 through the otherwise open aperture 14.

The plug 11 is retained releasably in its closed position with respect to the clip body aperture 14 by means of a pair of opposed latches 15 engageable within respective opposed openings 16 in the opposed walls of the body 2, as shown in Figures 1, 2, 4 and 5.

Because the latches 15 are resilient, the plug 11 can be readily released from its closed position with respect to the body aperture 14 and pivoted into its open position about the hinge 12.

As shown in Figures 1 to 5, the plug 11 is also provided at its free end with a lug 17 which, in the closed position of the plug 11, can act to retain a larger hooked end of a wiper arm fitted to the clip 1 in position with respect to its corresponding locating recess 6 and associated receiving surface 4 or to act as a back-up, should the retaining prong 8 fail for any reason, when the return portion of a smaller hooked end of a wiper arm is located within the recess 5 of the body 2.

In conventional manner, the clip is secured or securable to the pivot element (also not shown) of an associated wiper blade assembly by means of a snap fit in a corresponding pivot hole 18.

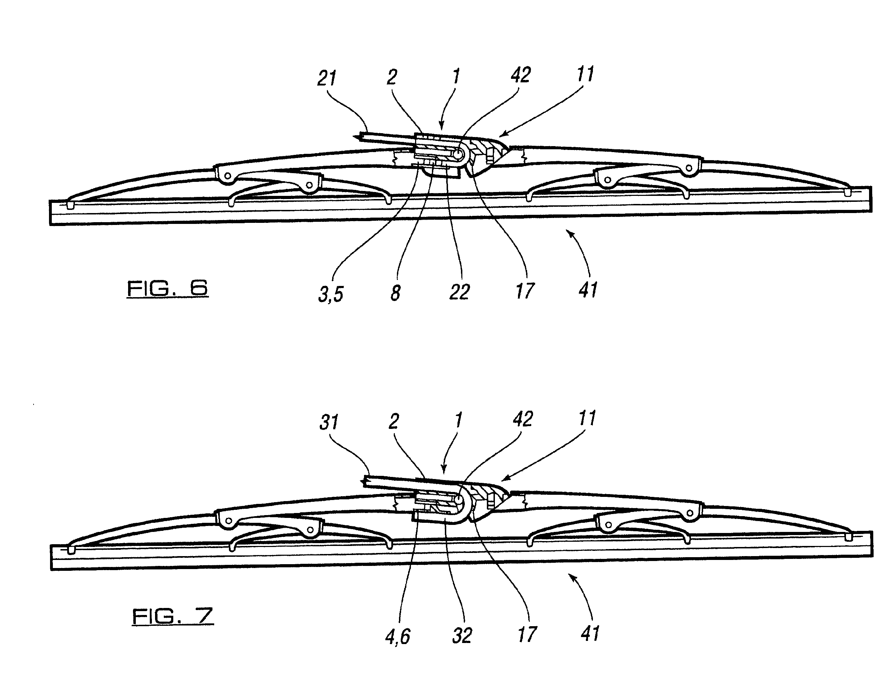

Turning now to Figure 6 of the accompanying drawings, here is shown a clip 1, such as that described above in relation to Figures 1 to 5 of the drawings, connecting the hooked end of a wiper arm 21 to a wiper blade assembly indicated generally at 41.

The assembly 41 is pivotally attached to the clip 1 via its associated pivot element 42.

In this embodiment, the return portion 22 of the hooked end of the wiper arm 20 is received in the locating recess 5 of the clip body 2, in close tolerance fit with the associated receiving surface 3 and with the resiliently releasable retaining prong 8 received within a complementary aperture in the return portion 22 of the hooked end of the wiper arm 21.

Also, the lug 17 of the plug 11, which is in its closed position, engages or confronts the arcuate portion of the hooked end of the wiper arm 21. In this configuration, the function of the plug lug 17 is merely to act as a back-up, should the retaining prong 8 and complementary aperture fail.

Alternatively, that lug 17 can be used to contribute to the retention of the hooked end of the wiper arm 21 within the body 2 of the clip 1, depending upon selected operating parameters.

With regard to Figure 7 of the drawings, hereagain the clip 1 is used to connect the hooked end of a wiper arm 31 to the wiper blade assembly 41, the hooked end of the arm 31 being larger than that of the wiper arm 21 discussed above in relation to Figure 6.

In the particular embodiment of Figure 7, the return portion 32 of the hooked end of the wiper arm 31 is located within the locating recess 6 and engages the corresponding surface 4 of the clip body 2.

In this particular arrangement, the lug 17 of the plug 11 engages the arcuate portion of the hooked end of the wiper arm 31, to retain that hooked end in proper position with respect to the clip 1 and, hence, the wiper blade assembly 41.

Again, the clip 1 is mounted pivotally upon the pivot element 42 of the assembly 41, as discussed above.

In both embodiments discussed above in relation to Figures 6 and 7, the outer surface of the plug 11 enhances the aerodynamic efficiency of the connection between the wiper arm 21, 31 and wiper blade assembly 41, whilst also preventing, or at least substantially reducing, the ingress of water and/or particles of dirt into the interior of the clip 1, thereby effectively extending its working life. Also, the exterior surface of the clip 11 is contoured such that it is pleasing to the eye.

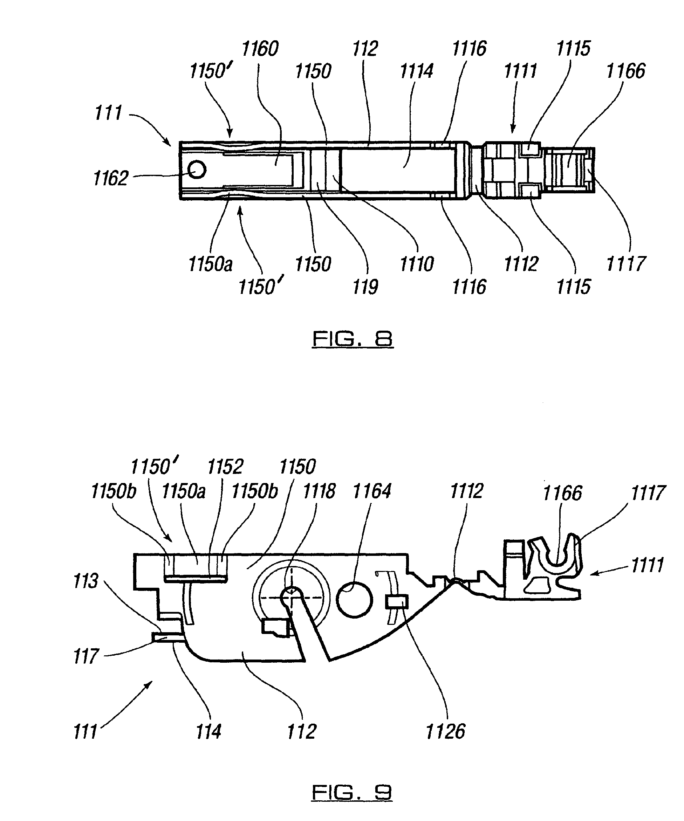

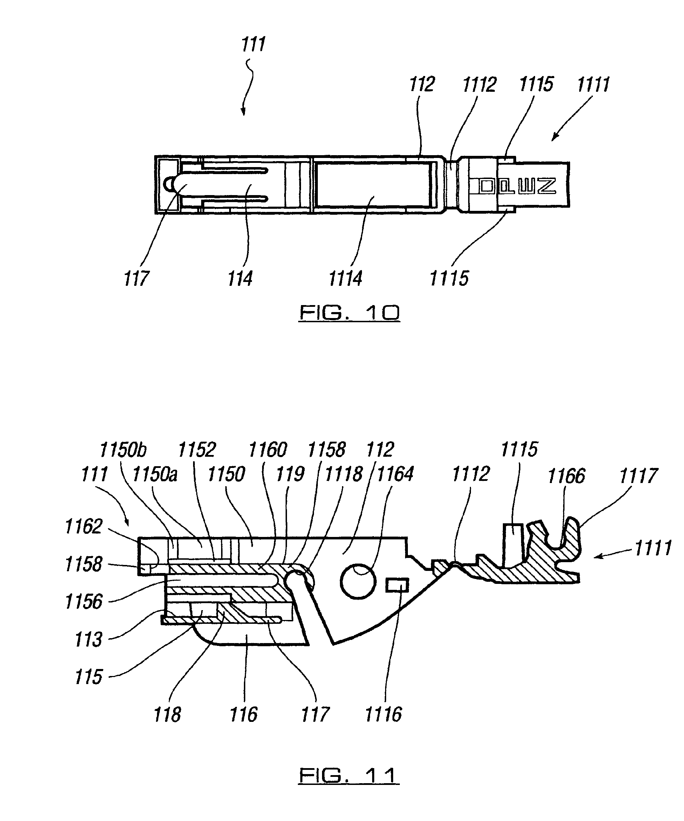

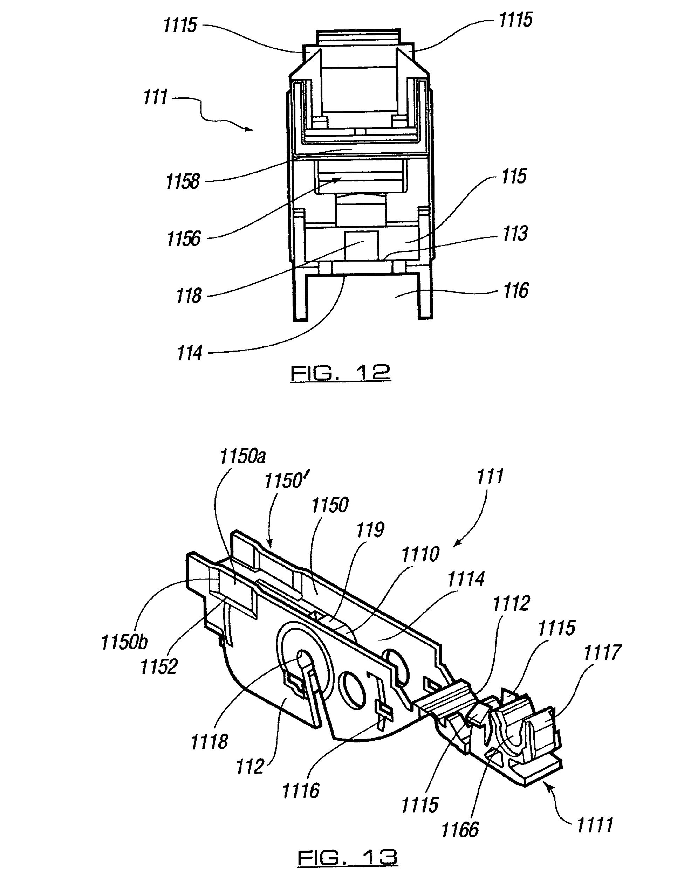

A second preferred embodiment of the present invention will now be described with reference to Figures 8 to 16 of the accompanying drawings. In the following description of the second embodiment, like numerals to those used in the description of the first embodiment but preceded by the numeral "11" will be used to denote like parts and therefore such like parts will not be further described herein except where such parts take a modified form than that found in the first embodiment.

Referring to Figures 8 to 13, the clip 111 in accordance with the second preferred embodiment is provided for separately connecting different sizes and different configurations of connecting ends of wiper arms (not shown) to a wiper blade assembly (not shown). The clip 111 has generally the same form as the clip 1 in accordance with the first embodiment and thus includes like features to all of the features of the clip 1 in accordance with the first embodiment in addition to a number of improvements.

A first such improvement can be more readily seen with reference to Figures 8 and 9. Portions 1150' of side walls 1150 of a body 112 of the clip 111 in the region, where a main portion of a hooked end of a corresponding wiper arm engages with an upper surface 119 of the body 112, extend inwardly over the upper surface 119 thereby narrowing a channel between the side walls 1150. In use, this necked portion of the channel receives the main portion of the hooked end of the wiper arm to lie in general engagement with said upper surface 119.

Each side wall portion 1150' has an arcuate central portion 1150a which is spaced above the upper surface 119 by an elongate aperture 1152 formed in its respective side wall 1150 and end portions 1150b which connect it to the main body of its respective side wall 1150. The side wall portions 1150' are resiliently deformable such that a main portion of a hooked end of a wiper arm having a width greater than the smallest distance between said side wall portions 1150' when received in the channel causes said side wall portions 1150' to deflect outwardly. The side walls portions 1150' are therefore provided as a means of accommodating wiper arms having hooked ends of different widths in a range from the smallest distance between said side wall portions 1150' to the distance between the side walls 1150 of the body 112 farther along the channel. For a wiper arm having a hooked end of a width in the permissible range but less than the wide of the channel (at its widest part), the resiliently deformable side wall portions 1150' act to prevent skewing or sideways shifting of the main portion of the hooked end of a wiper arm received in the channel.

The resiliently deformable side wall portions 1150' are preferably formed adjacent the outer end of the channel and at a position generally intermediate that outer end of the channel and an arcuate surface 1110 of the body 112 which, in use, is engaged by a curved portion of the hooked end of a wiper arm. Alternatively, as can be seen in Figures 1 and 2 with respect to the first preferred embodiment of the clip 1 in accordance with the invention, resiliently deformable side wall portions 50' are provided at an end of the channel remote from the arcuate surface 10.

A second improvement of the clip 111 in accordance with the second embodiment can be more readily seen with references to Figures 8, 11 and 12. The clip 111 is adapted to receive a bayonet type end of a wiper arm in an elongate recess 1156 extending into the body 112 between the upper surface 119 and a pair of spaced, hooked end receiving surfaces 113, 114 which are at least partially defined by respective locating recesses 115, 116 on opposed upper and lower sides of a wall 117 of the clip body 112.

The elongate recess 1156 is bounded on its upper side by a wall 1158, the upper surface of which comprises the upper surface 119 of the clip body 112. The portion of this wall 1158 that overlies the elongate recess 1156 comprises a resiliently deformable tongue member 1160 having its free end spaced farthest from an outer edge portion of the wall 1158. The outer edge portion of the wall 1158 carries an aperture 1162. The aperture 1162 is engageable with a complementary retaining prong on the connecting end of the bayonet type wiper arm. The elongate recess 1156 receives a bayonet type connecting end of a wiper arm in close tolerance therewith.

A further improvement of the clip 111 in accordance with the second embodiment can be more readily seen with references to Figures 8, 9 and 13. In order to connect wiper arm of the type having a side lock pin connection arrangement, the body 112 of the clip 111 is provided with an aperture 1164 extending therethrough for receiving, in use, the side locking pin of the associated wiper arm. The aperture 1164 is positioned in the body 112 of the clip 111 between a pivot hole 1118 which, in use, receives a pivot element of a wiper blade assembly for wiper arms of the hooked end and/or bayonet connection type arrangements and a hinge 1112 connecting a plug 1111 to the clip body 112.

The aperture 1164 is made sufficiently large such that an enlarged head of a side locking pin can be passed therethrough, with another enlarged head thereof at an opposite end of the pin connecting to an associated wiper arm (not shown). A narrowed section of the pin between the enlarged connecting heads is received in the aperture 1164.

The plug 1111 is of a similar arrangement to the plug 11 of the first embodiment in that it can be pivoted about its hinge with respect to an aperture 1114 such that an outer surface of the plug 1111 provides a generally smooth, continuous surface with the outer surface of the adjacent end of the wiper arm when in its closed position. The plug 1111 also has at its free end a lug 1117 and a pair of opposed latches 1115.

In the second preferred embodiment of the invention, the free end of the plug 1111 is formed not only to provide the lug 1117 but to also provide a snap-fit aperture 1166 integral with the lug 1117 and located between the lug 1117 and the latches 1115. The position of the snap-fit aperture 1166 is such that, when the plug 1111 is pivoted into the aperture 1114 to occupy its closed position, the snap-fit aperture 1166 is co-incident with the aperture 1164 such that it snap-fittingly engages the narrowed section of the side locking pin of the associated wiper arm, thereby pivotally connecting the wiper blade assembly to the wiper arm.

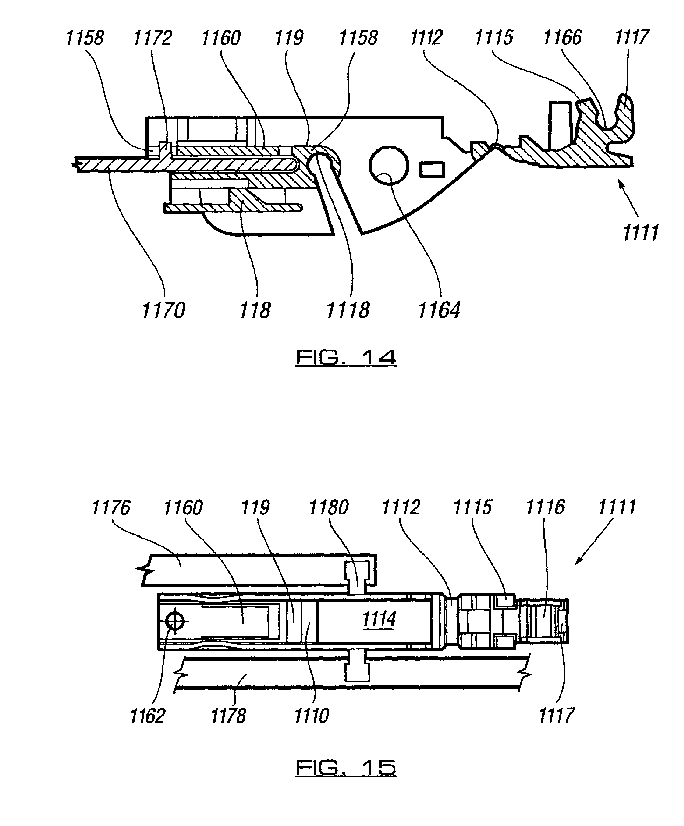

Turning now to Figure 14 of the accompanying drawings, there is shown a clip 111, such as that described in accordance with the second embodiment of the invention, connecting the bayonet type connecting end of a wiper arm 1170 to a wiper blade assembly (not shown).

In this arrangement, the elongate plain bayonet type end of the wiper arm 1170 is received in the elongate recess 1156 of the clip body 112 in a close tolerance fit within the recess 1156 and with a retaining prong 1172 thereof engaged in the aperture 1162 carried on the outer edge of the wall 1158. In order to engage the retaining prong 1172 with the aperture 1162, it is necessary to introduce the end of the wiper arm 1170 in an upward direction with respect to the elongate recess 1156 such that a leading end of said wiper arm engages the resiliently deformable tongue member 1160 causing it to deflect upwardly above the upper surface 119 of the clip body 112. The end of the wiper arm 1170 is pushed into the clip body 112 in generally the same direction until the retaining prong 1172 is below the retaining aperture 1162 at which point the wiper arm is rotated to raise the prong 1172 up into the retaining aperture 1162. The close tolerance between the surfaces of the elongate recess 1156 and the wiper arm end also help to retain it in position with respect to the clip.

A wiper blade assembly can be pivotally attached to the clip 111 by locating a pivot element thereof in the snap-fit aperture 1118 of the clip body 112.

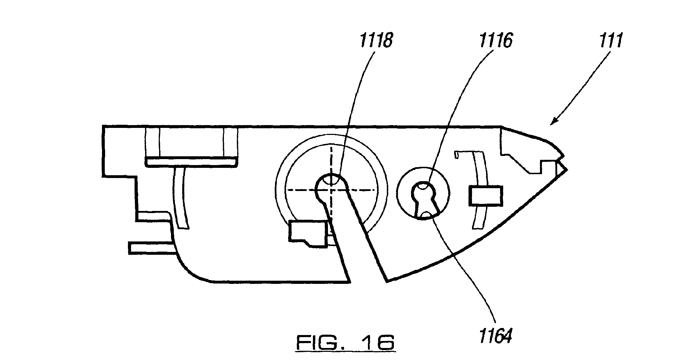

Turning now to Figures 15 and 16, of the accompanying drawings, there is shown a clip 111, such as that described in accordance with the second embodiment of the invention, connecting a side locking pin type wiper arm 1176 (shown schematically) to a wiper blade assembly 1178 (also shown schematically).

In this arrangement, a locking pin 1180 of the associated wiper arm 1176 is located through the larger aperture 1164 in the clip body 112 such that a narrow portion of the pin 1180 is received in the aperture 1164, whereas respective enlarged head portions of the pin depend outwardly from the clip body 112. On one side of the clip 111 the wiper arm 1176 is connected to the pin 1180 whilst on the other side the wiper blade assembly 1180 is mounted to the other end of the pin 1180. When the plug 1111 is moved to its closed position, as shown in Figure 16, the narrow part of the side locking pin 1180 snap-fits into the snap-fit aperture 1166 of the clip body 112, thereby pivotally securing the pin 1180 in position with respect to the clip 111.

The clip 111 in accordance with the second embodiment of the invention is also formed as a unitary component. It may also comprise a plastics moulded component.

## Claims

1. A clip for connecting an end of a wiper arm to a wiper blade assembly, the clip comprising a body defining two or more recesses arranged to receive therein different ends of wiper arms.

2. A clip according to claim 1, wherein different ends of wiper arms are receivable in respective ones of the recesses in close tolerance or friction fit therewith.

3. A clip according to claim 1 or 2, wherein the recesses are arranged to receive ends of wiper arms of different connection configurations and/or different sizes.

4. A clip according to claim 1, 2 or 3, wherein at least one of the recesses is provided with a resiliently deformable tongue member to assist reception of an end of a wiper arm having a bayonet type connecting end in said at least one recess.

5. A clip according to claim 4, wherein the recess for receiving a wiper arm having a bayonet type connecting end has an aperture associated therewith for engaging a complementary retaining prong of the wiper arm on reception of the wiper arm connecting end in the recess.

6. A clip according to any preceding claim, wherein the two or more recesses comprise two or more spaced surfaces which are arranged to receive thereon respective different sizes of hooked ends of wiper arms.

7. A clip according to any preceding claim, wherein the body of the clip includes a pair of spaced surfaces defined by respective locating recesses.

8. A clip according to claim 7, wherein the locating recesses are provided on opposed sides of a wall of the clip body.

9. A clip according to claim 6 or claim 7 or 8 when dependent thereon, wherein at least one of the receiving surfaces is be provided with a resilient retaining prong which can be engaged within a complementary aperture in the hooked end of a wiper arm fitted to the clip.

10. A clip according to claim 9, wherein the resilient retaining prong is engageable within a complementary aperture in the return portion of the hooked end of a wiper arm fitted to the clip.

11. A clip according to claim 9 or 10, wherein the retaining prong is resilient, so that it can be disengaged from the complementary aperture, to permit the hooked end of the wiper arm to be detached from the clip, for maintenance purposes or when changing the arm or associated wiper blade assembly.

12. A clip according to any preceding claim, wherein the clip body has a channel for accommodating a main portion of a hooked end of a wiper arm, the channel comprising an upper surface of a wall and side walls of the clip body, at least one of the side walls having a resiliently deformable wall portion which extends into the channel to engage a main portion of a hooked end of a wiper arm.

13. A clip according to claim 12, wherein the resiliently deformable wall portion at least partially defines a necked portion of the channel adjacent an outer end thereof.

14. A clip according to claim 12 or 13, wherein the at least one resiliently deformable wall portion enables the clip to accommodate wiper arms having hooked ends of different widths.

15. A clip according to any preceding claim further comprising a plug for effectively closing an otherwise exposed aperture in the clip body after the end of a wiper arm has been fitted thereto.

16. A clip according to claim 15, wherein the plug is movable between respective open and closed positions with respect to the aperture.

17. A clip according to claim 15 or 16, wherein the plug is movable between respective open and closed positions with respect to the aperture by means of a hinge.

18. A clip according to claim 17, wherein the hinge is formed integrally with the clip body and plug.

19. A clip according to any of claims 15 to 18, wherein the outer surface of the plug, when in its closed position with respect to the aperture, is shaped so as to provide a generally smooth continuous surface with the outer surface of the adjacent end of the wiper arm, thereby rendering such a combination aerodynamically efficient, as well as being aesthetically pleasing to the eye.

20. A clip according to any of claims 15 to 19, wherein the plug, in its closed position, prevents, or at least substantially reduces, the ingress of water and/or dirt particles into the clip body through the otherwise open wiper arm access aperture.

21. A clip according to any of claims 15 to 20, wherein the plug is provided with a lug which, with the plug in its closed position with respect to the aperture in the clip body, engages the arcuate surface of the hooked end of a wiper arm fitted to the clip.

22. A clip according to any of claims 15 to 21, wherein the lug of the plug acts as a back-up, should the other means for retaining the hooked end of the wiper arm in the clip fail.

23. A clip according to any of claims 15 to 21, wherein the lug is used to retain in position the hooked end of a wiper arm fitted to the clip.

24. A clip according to claim 21 or claim 22 or 23 when dependent thereon, wherein the lug has a snap-fit aperture formed integrally therewith and arranged such that, when the plug is moved to its closed position, the snap-fit aperture is coincident with another aperture formed in the clip body.

25. A clip according to claim 24, wherein the snap-fit aperture is arranged to engage a pin of a wiper arm side connection means located through the other aperture.

26. A clip according to claim 24 or 25, wherein the other aperture is larger than the snap-fit aperture.

27. A clip for connecting a wiper arm to a wiper blade assembly, the clip comprising a body having an aperture therein for permitting access of the hooked end of a wiper arm to a close tolerance or friction fit surface, wherein the clip also comprises a plug for closing the access aperture, which plug, in its closed position with respect to the aperture, provides an exterior surface which has enhanced aerodynamically efficiently and is aesthetically pleasing to the eye.

28. A clip according to claim 27, wherein the plug comprises a lug which, when the plug is in its closed position with respect to the otherwise open aperture, engages the arcuate or other surface of the hooked end of a wiper arm fitted to the clip.

29. A clip according to claim 27 or 28, wherein the plug is hinged to the body of the clip.

30. A clip according to claim 29, wherein the plug is hinged integrally to the clip body.

31. A clip according to any of claims 27 to 30, wherein the clip is formed from a single plastics moulding.

32. A clip according to claim 31, wherein the hinge is provided as a weakened portion thereof.

33. A clip for connecting a wiper arm to a wiper blade assembly, the clip comprising a body having an aperture therein for permitting access of the hooked end of a wiper arm to a close tolerance or friction fit surface, wherein the clip includes a channel for accommodating a main portion of a hooked end of a wiper arm, the channel comprising an upper surface of a wall and side walls of the clip body, with at least one of the side walls having a resiliently deformable wall portion which extends into the channel to engage a main portion of a hooked end of a wiper arm.

34. A clip according to claim 33, wherein the resiliently deformable wall portion at least defines a necked portion of the channel adjacent an end thereof.
